# EUROPÄISCHE PATENTSCHRIFT

(11) **EP 3 284 082 B1**
(45) Veröffentlichungstag und Bekanntmachung des Hinweises auf die Patenterteilung: **17.02.2021**
(21) Anmeldenummer: 16715632.2
(22) Anmeldetag: 06.04.2016
(51) Int. Cl.: G10D 9/00, G10D 9/06, F16B 2/10

(54) **KLANG-DEFLEKTOR FÜR BLASINSTRUMENTE**
SOUND DEFLECTOR FOR WIND INSTRUMENTS
DÉFLECTEUR ACOUSTIQUE POUR INSTRUMENTS À VENT

(30) Priorität: 13.04.2015 CH 5092015
(43) Veröffentlichungstag der Anmeldung: 21.02.2018
(73) Patentinhaber: Jancic, Silvin, 5612 Villmergen (CH)
(72) Erfinder: Jancic, Silvin, 5612 Villmergen (CH)
(74) Vertreter: Tompkin, Christine
(86) Internationale Anmeldenummer: PCT/IB2016/051935
(87) Internationale Veröffentlichungsnummer: WO 2016/166637

(56) Entgegenhaltungen:
- EP-A1- 2 842 807
- EP-A2- 1 113 699
- DE-U1-202004 012 767
- JP-A- 2005 284 035
- US-A- 3 099 183
- US-A1- 2010 001 154
- US-E- R E30 300

## Beschreibung

### Technisches Gebiet

Die Erfindung betrifft einen Klang-Deflektor für Blasinstrumente, zum Beispiel ein Saxophon, wobei der Klang-Deflektor eine Klang-Deflektor-Fläche und eine Vorrichtung zur Halterung der Klang-Deflektor-Fläche aufweist.

### Stand der Technik

Klang-Deflektoren werden beim Spielen von Instrumenten, insbesondere von Blechinstrumenten wie zum Beispiel Saxophonen oder Trompeten verwendet, um den Klang zum Spieler zurück zu lenken, sodass dieser während dem Spiel in einem Orchester oder einer Band sich selbst besser hören kann.

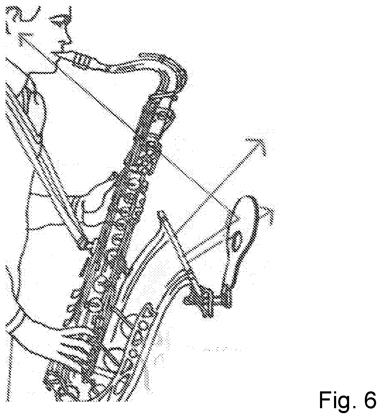

Klang-Deflektoren sind im Handel erhältlich, wie zum Beispiel der sogenannte "Ploeger sound mirror" für Saxophone wie in Figur 6 gezeigt. Dieser umfasst eine aus Kunststoff gefertigte Klammer, die am unteren Rand des Instrumententrichters mittels einer Federklammer befestigt wird, wobei die Befestigung so nah als möglich am Rand des Trichters platziert werden sollte. An der Klammer ist eine gerade Stange befestigt, an deren Ende der Klangreflektor angeordnet ist. Die gerade Stange kann in ihrer Position an der Klammer justiert werden, sodass die Distanz zwischen Klammer und Klangreflektor veränderbar ist.

Ein weiterer Klangreflektor lässt sich mittels einer länglichen Platte am Trichter befestigen, die sich über den gesamten Durchmesser der Trichteröffnung erstreckt. Weitere bekannte Klang-Reflektoren sind für eine Befestigung an einem Notenständer oder anderem, vom Instrument unabhängigen Objekt bestimmt.

US 3,099,183 offenbart einen Reflektor für ein Blasinstrument mit einem ersten gerundeten Element, das über den Rand eines Trichters angelegt werden kann und einem zweiten kleineren, ebenfalls leicht gerundeten Gegenstück, das auf die Unterseite des Trichters gelegt wird. Die beiden gerundeten Teile werden mittels einer Schraube am Trichter befestigt. Am ersten gerundeten Element ist eine Kugel angeordnet, die von einer Federklammer umschlossen ist. Der Reflektor ist mit dieser Federklammer verbunden.

US Re. 30,300 (US 4,012,983) offenbart einen akustischen Reflektor für ein Blasinstrument mit einem ersten flach ausgebildeten klemmenden Teile und einem zweiten mit einem Vorsprung versehenden zweiten klemmenden Teil, die mittels einer Schraube am Trichterrand eines Instruments befestigt werden. Am ersten Teil ist eine Stange angeordnet, mit der der Reflektor verbunden ist.

US 2019/0001154 offenbart eine Klammer zur Befestigung eines Mikrofons an einem Musikinstrument mit zwei Teilen, die über und unter dem Rand des Trichters eines Blasinstruments mittels einer Torsionsfeder befestigt werden kann. Die beiden klemmenden Teile weisen gleichmässig gekrümmte Flächen auf. Ein Mikrofon kann an einem der Teile fixiert werden.

JP2005284035 offenbart ein Stimmgerät, das an einem Instrument befestigt werden kann und zwei Greifarme aufweist. Der eine Greifarm weist ein flach und hohl ausgebildetes, elastisches Element auf, während der zweite Greifarm zwei vorstehende, flach ausgebildete Teile aufweist, zwischen denen sich eine gerundete Fläche befindet. Beim Greifen eines Instrumententeils wird das elastische Element zusammengedrückt, sodass es sich der Form des Instruments anpasst. Der zweite Greifarm mit der gerundeten Fläche und den vorstehenden flachen Elementen weist eine vorbestimmte Form auf. Die vorstehenden flachen Elemente liegen dem elastischen Element genau gegenüber.

### Beschreibung der Erfindung

Es ist der vorliegenden Erfindung die Aufgabe gestellt, einen Klang-Deflektor für Blasinstrumente zu schaffen, der eine verbesserte Halterung an einem Instrument ermöglicht.

Diese Aufgabe ist durch einen Klang-Deflektor gemäss Anspruch 1 gelöst.

Es wird Klang-Deflektor offenbart mit einer Klang-Deflektor-Fläche und einer Vorrichtung zu dessen Halterung am Rand des Trichters eines Blasinstruments. Erfindungsgemäss weist die Vorrichtung zur Halterung der Deflektor-Fläche ein Unterteil und ein Oberteil auf, die an der inneren Fläche bzw. äusseren der Seite des Trichters befestigbar und fixierbar sind. Das Ober- und Unterteil sind mittels eines Scharniers miteinander verbunden. Gemäss der Erfindung weist das Unterteil und Oberteil je mindestens zwei Noppen auf. Bei einem Zusammenbringen des Ober- und Unterteils sind die Noppen des Oberteils bezüglich der Noppen des Unterteils versetzt zueinander angeordnet und sind als solche relativ zu ihrer Mitte seitlich verschoben angeordnet. Die Klang-Deflektor-Fläche ist am Scharnier des Ober- und Unterteils schwenkbar befestigt. Zudem weisen die Noppen des Ober- und Unterteils abgerundete Kanten auf.

Ein Klang-Deflektor gemäss der Erfindung ermöglicht insbesondere eine Befestigung an Instrumenten mit Trichterrändern unterschiedlicher Formen. Die bezüglich der Mitte der Noppen seitlich verschobene Anordnung der Noppen am Oberteil und Unterteil der Halterungsvorrichtung ermöglicht eine klemmende Befestigung des Klang-Deflektors an einem Instrumententrichter mit unterschiedlichen Krümmungen und unterschiedlicher Dicke des Trichters sowie unterschiedlicher Form des Trichterrands. So ist der erfindungsgemässe Klang-Deflektor an einem Saxophon, einer Trompete, Tuba, oder anderen Blasinstrument oder auch zum Beispiel an einem Notenständer verwendbar und somit universell einsetzbar. Durch die Anordnung der Noppen an der Klemmvorrichtung wird eine optimierte Anpassung der Klemmvorrichtung am Trichter erreicht, sodass nur eine kleine Kraft zur Fixierung des Ober- und Unterteils am Trichter angewendet werden muss. Somit wird eine Beschädigung des Trichters durch Druckstellen infolge von übermässigem Anziehen der Fixierung vermieden.

Die abgerundeten Kanten tragen vermehrt zur Vermeidung von Druckstellen am Trichter des Instruments bei.

Die schwenkbare Befestigung der Deflektor-Fläche am selben Scharnier des Ober- und Unterteils ermöglicht eine leichte und schnelle Ausrichtung der Umlenkfläche mit nur einer Hand.

Die Deflektor-Fläche ist damit direkt mittels des Scharniers mit dem Ober- und Unterteil verbunden, das der Befestigung durch Klemmhalterung dient. Dadurch ist die Halterung klein und leicht sowie auch kompakt mit einer kleinen Anzahl Elemente und kleinen Hebelwirkungen ausgeführt. Dies ermöglicht insgesamt eine einfache Handhabung des Geräts auch während des Spielens.

In einer Ausführung weisen die Noppen Gummi auf. Dies ermöglicht eine optimierte Anpassung der Noppen an das Profil des Instrumententrichters und schützt den Trichter weiter vor Beschädigung durch den Klemmdruck.

In einer besonderen Ausführung weist das Oberteil und das Unterteil je drei Noppen auf, die auf dem Oberteil bzw. Unterteil gleichmässig verteilt sind und bei einem Zusammenbringen des Ober- und Unterteils und Auflegen an einem Trichterrand aufeinander drücken, wobei der Trichterrand dazwischen liegt. Diese Ausführung bewirkt eine erhöhte Stabilität der Befestigung.

In einer weiteren Ausführung weisen das Oberteil und Unterteil je eine gerundete, ebene Form auf, auf der die Noppen verteilt sind. In dieser Ausführung ist die Umfassung des Trichterrands durch die Noppen ähnlich der Art von Zähnen eines Gebisses, dessen obere und untere Zähne bezüglich ihrer Mitte seitlich verschoben zueinander angeordnet sind.

In einer Ausführung sind das Oberteil und das Unterteil der Halterungsvorrichtung ungleich lang ausgebildet, sodass das eine Teil über das andere hinausragt. Das Unterteil und Oberteil weisen je zwei Noppen auf, die jeweils am äusseren, dem Scharnier abgewandten Ende jedes Teils angeordnet sind.

In einer Ausführung ist das Scharnier mittels einer Schraube fixierbar. Dadurch kann die Festigkeit der Verbindung der Deflektor-Fläche mit dem Ober- und Unterteil angepasst werden.

In einer Ausführung besteht zwischen dem Scharnier der Halterungsvorrichtung und den Noppen, die dem Scharnier am nächsten liegen, ein Freiraum. Weist das Blasinstrument an seinem Rand einen Wulst auf, so kann dieser Wulst in diesem Freiraum platziert werden.

In einer Variante weist die Halterung des Klang-Deflektors zu dessen Fixierung eine lösbare Schraubenbefestigung auf.

In einer alternativen Ausführung weist die Halterung des Klang-Deflektors zu dessen Fixierung eine Feder auf.

Erfindungsgemäss kann der Klang-Deflektor eines der vorgängig beschriebenen Ausführungen sowie auch mehrere der Merkmale in Kombination aufweisen.

Weitere Vorteile der Erfindung folgen aus der nachfolgenden Beschreibung, in welcher die Erfindung anhand eines in den schematischen Zeichnungen dargestellten Ausführungsbeispiels näher erläutert wird.

### Kurze Beschreibung der Figuren

Figur 1 zeigt den erfindungsgemässen Klang-Deflektor in der Anwendung durch einen Saxophonspieler.
Figur 2a zeigt den Klang-Deflektor als Ganzes in Perspektive.
Figur 2b zeigt den Klang-Deflektor aus Figur 2a in einer Seitenansicht.
Figuren 3a-d zeigen die Vorrichtung zur Halterung des Klang-Deflektors am Trichterrand eines Blasinstruments, wovon

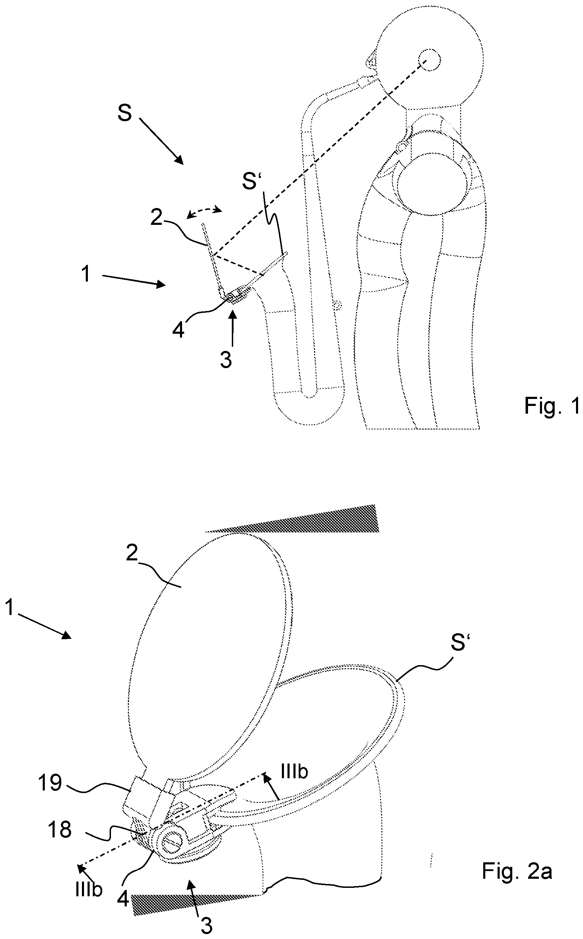

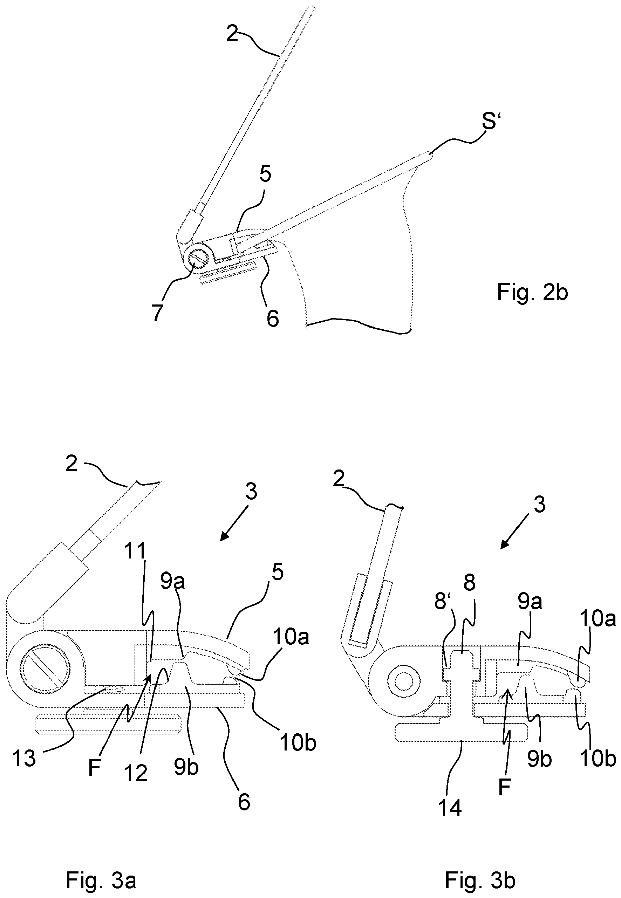

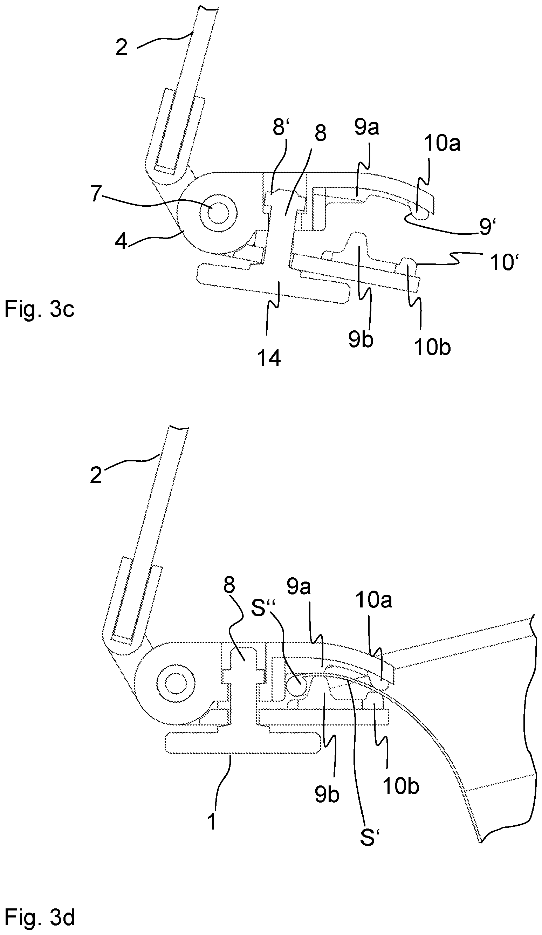

Figur 3a die geschlossene Vorrichtung zur Halterung des Klang-Deflektors in einer Seitenansicht, Figur 3b die geschlossene Vorrichtung in einer Querschnittansicht gemäss IIIb-IIIb in Figur 2a, Figur 3c die geöffnete Vorrichtung in einer Querschnittansicht, und Figur 3d die geschlossene Vorrichtung in einer Querschnittansicht angeordnet an einem Trichterrand zeigt.

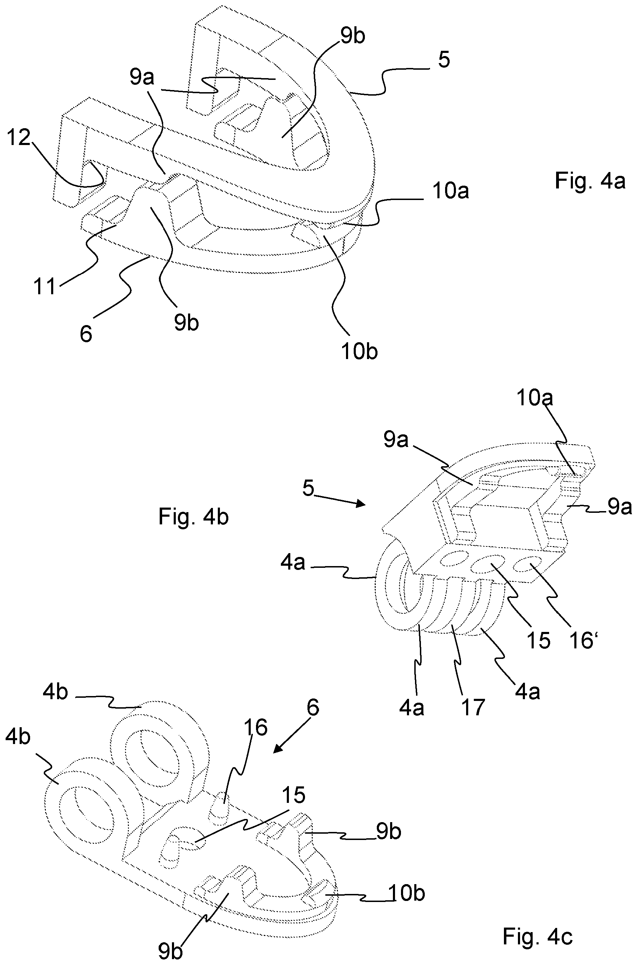

Figur 4a zeigt in Perspektive das Ober- und Unterteil der Vorrichtung aus Figur 2b als Einzelteile.
Figur 4b zeigt das Oberteil aus Figur 2b mit Scharnierteil in einer Perspektivsicht von unten.
Figur 4c zeigt das Unterteil aus Figur 2b mit Scharnierteil in einer Perspektivsicht von oben.

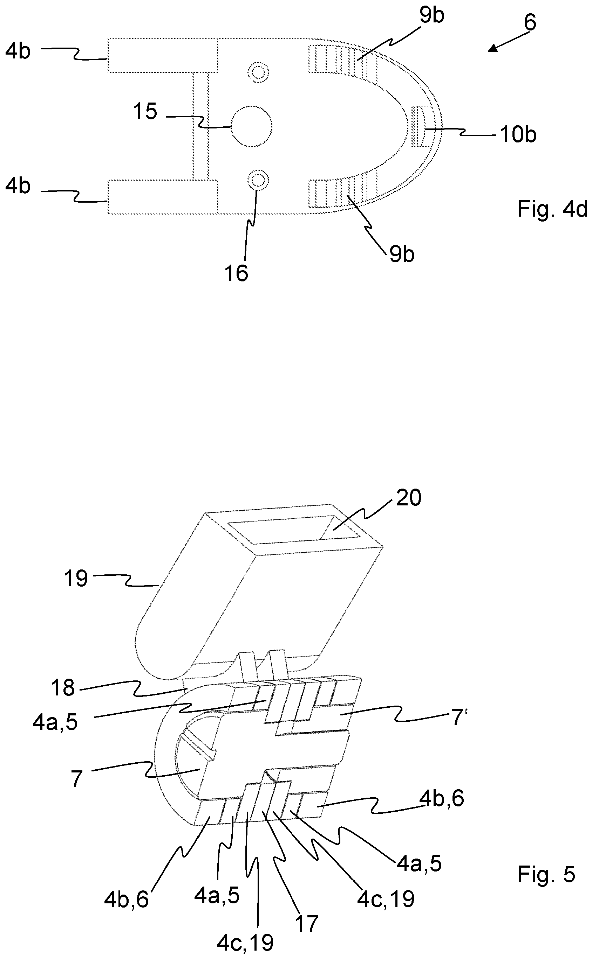

Figur 4d zeigt das Unterteil aus Figur 2b in einer Draufsicht.
Figur 5 zeigt eine Perspektivansicht des Scharniers der Vorrichtung aus Figur 2b in einem Querschnitt.
Figur 6 zeigt einen Klang-Reflektor gemäss dem Stand der Technik.

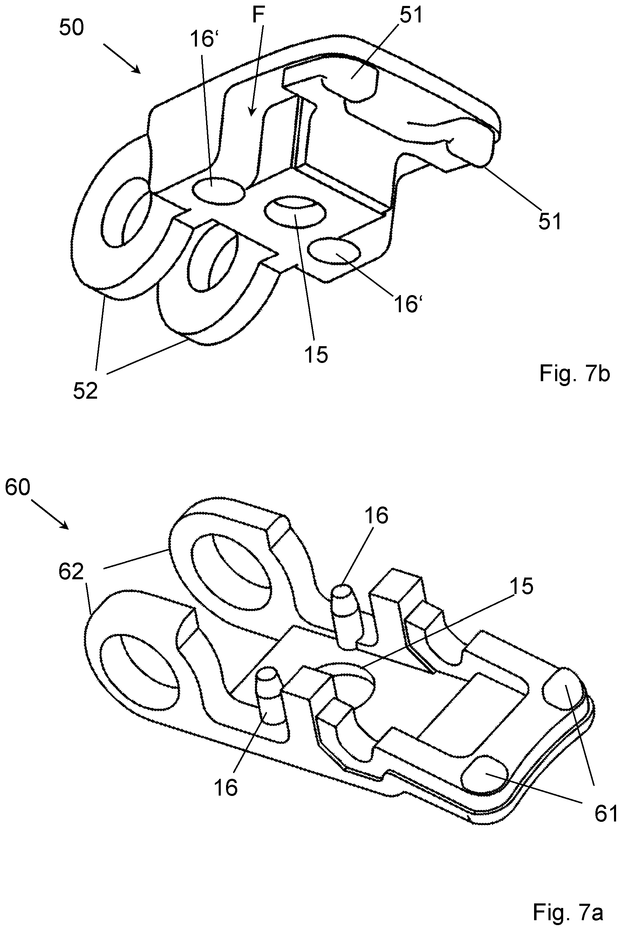

Figur 7a-c zeigen eine weitere Ausführung der Halterungsvorrichtung des erfindungsgemässen Klang-Deflektors, wovon
Figur 7a eine perspektivische Ansicht des Unterteils,
Figur 7b eine perspektivische Ansicht des Oberteils,

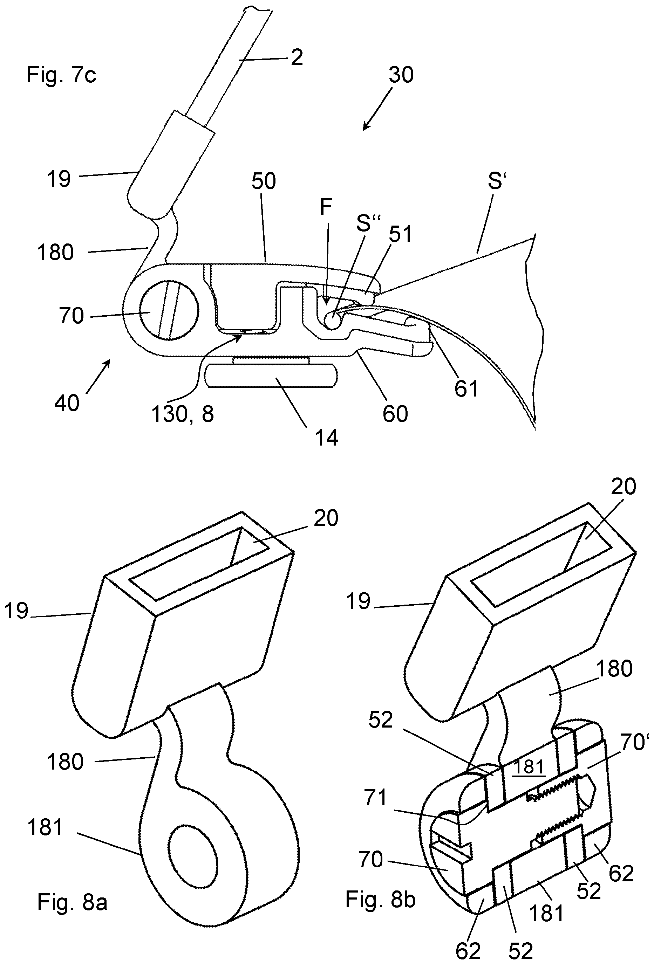

Figur 7c eine Seitenansicht der Halterungsvorrichtung mit Verbindungsteil und Teil der Deflektorfläche zeigt.
Figur 8a zeigt eine perspektivische Ansicht einer weiteren Ausführung des Verbindungsteils zwischen dem Scharnier und der Klang-Deflektorfläche,
Figur 8b zeigt die Halterungsvorrichtung aus Figuren 7a-c und insbesondere eine perspektivische Ansicht einer weiteren Ausführung des Scharniers mit Fixierschraube im Querschnitt.

In den Figuren sind für dieselben Elemente jeweils dieselben Bezugszeichen verwendet worden und erstmalige Erklärungen betreffen alle Figuren, wenn nicht ausdrücklich anders erwähnt.

### Ausführungsbeispiele der Erfindung

Figur 1 zeigt einen erfindungsgemässen Klang-Deflektor 1 befestigt an einem Blasinstrument, beispielsweise einem Saxophon S. Der Deflektor 1 weist eine beispielsweise aus einem Kunststoff gefertigte Deflektor-Fläche oder -Platte 2 auf, die mittels einer Vorrichtung 3 zur Halterung der Deflektorfläche 2 am Trichterrand S' des Instruments klemmend befestigbar und fixierbar ist. Die Vorrichtung weist hierzu zwei Teile 5 und 6 auf, die mittels eines Scharniers 4 miteinander verbunden sind. Die Deflektorfläche 2 ist in ihrer Winkelausrichtung zum Trichterrand S' durch schwenkendes Bewegen der Fläche 2 um die Scharnierachse 4 mit einer Hand einstellbar. So kann der Musiker auch während des Spielens die Winkelausrichtung des Klang-Deflektors mit einer Hand justieren. Der Klang-Deflektor 1 zeichnet sich durch seine kompakte Ausführung, insbesondere der Halterungsvorrichtung 3 aus. Sowohl die Scharnierfunktion der klemmenden Vorrichtung als auch die Scharnierfunktion zur Veränderung der Winkelausrichtung der Deflektor-Fläche 2 sind in ein und demselben Element 3 integriert.

Figuren 2a und b zeigen den Klang-Deflektor 1 und insbesondere die Halterung 3 in näherem Detail. Die Vorrichtung 3 weist ein Oberteil 5 und Unterteil 6, oder Backen 5, 6, auf, die mittels des Scharniers 4 miteinander verbunden sind. Die beiden Teile 5 und 6 des Scharniers 4 sowie ein Verbindungselement 18 für die Deflektor-Platte 2 (näher in Figur 5 gezeigt und deren Beschreibung erläutert) sind mittels einer Schraube 7 oder eines anderen geeigneten Scharnierbolzens zusammengehalten. Das Ober- und Unterteil 5, 6 können mittels dieses Scharniers 4 auseinandergeklappt und um den Rand des Trichters S' eines Blasinstruments angelegt werden. Dabei wird das Oberteil 5 an die innere, das Unterteil 6 auf die äussere Seite des Trichters S' angelegt. Die beiden Teile 5, 6 sind am Trichter befestigbar und fixierbar, indem sie mittels des Scharniers 4 zusammengebracht und beispielsweise mittels einer Fixierschraube 8 und Schraubenmutter 8' klemmend befestigt werden. Dabei können die beiden Teile 5, 6 auch anderweitig fixiert werden, wie zum Beispiel durch eine Druckfeder, einer Torsions- oder Zugfeder.

Figuren 3a-d zeigen die Ausführung der Befestigungsvorrichtung 3 in näherem Detail. Am Oberteil 5 sind vorstehende Elemente oder Noppen 9a und 10a angeordnet, die sich zum Unterteil 6 hin erstrecken während das Unterteil 6 vorstehende Elemente 9b und 10b aufweist, die sich zum Oberteil hin erstrecken. Insbesondere sind die vorstehenden Elemente 9a, 9b des Ober- und Unterteils sowie die vorstehenden Elemente 10a, 10b jeweils einander gegenüberliegend jedoch versetzt angeordnet, d.h. die Elemente 9a bzw. 10a des Oberteils sind bezüglich der Elemente 9b bzw. 10b des Unterteils relativ zu ihrer Mitte seitlich verschoben angeordnet. Durch diese Anordnung entsteht beim Zusammenbringen des Ober- und Unterteils 5, 6 eine Verzahnung. Dies heisst, dass die Elemente 9a und 9b nicht mittig sondern seitlich verschoben aufeinander treffen. Für die Elemente 10a und 10b trifft es gleichsam zu. Die relative seitliche Verschiebung ermöglicht, dass ein Trichter stabil gehalten werden kann, dies unabhängig von dessen Krümmung. Die Elemente 9a, b, 10a, b zeichnen sich zudem insbesondere durch ihre abgerundeten Kanten 9', 10' aus, wie in Figur 3c gekennzeichnet. Diese Abrundungen erhöhen die Anpassungsgenauigkeit der Befestigungsvorrichtung 3 an eine gekrümmte Form des Trichters.

Zwischen dem Scharnier 4 der Klemmvorrichtung 3 und den innersten vorstehenden Elementen 9a, 9b, die sich am nächsten zum Scharnier 4 befinden, ist ein Freiraum F realisiert, welcher der Platzierung eines verdickten Trichterrands S' eines Instruments dient. In dem gezeigten Beispiel ist der Freiraum F im Bereich zwischen der Fixierschraube 8 und den innersten vorstehenden Elementen 9a und 9b realisiert. Der Freiraum F ist beispielsweise durch Ausnehmungen am Element 9b und 9a oder entsprechende Flanke an den Elementen ausgeführt.

Wird die Vorrichtung am Trichterrand S' befestigt, kommt der Wulst S" des Trichterrands S' im Freiraum F zu liegen, wie in Figur 3d gezeigt, ohne beschädigt zu werden.

Die äusseren, vom Scharnier entfernten Elemente 10a und 10b sind, ähnlich den Schneidezähnen eines Gebisses, versetzt angeordnet, (d.h. die Elemente 10a des Oberteils sind bezüglich der Elemente 10b des Unterteils relativ zu ihrer Mitte seitlich verschoben), indem das Element 10a des Oberteils 5 im Vergleich zu Element 10b des Unterteils 6 weiter aussen angeordnet ist. Beim Zusammenbringen des Ober- und Unterteils 5, 6 berühren sich die vorstehenden Elemente im Bereich ihrer abgerundeten Kanten. Diese versetzte Anordnung zusammen mit der Abrundung der Kanten 9', 10'ermöglicht eine Platzierung eines gekrümmten Trichters S' wie in Figur 3d gezeigt. Insbesondere erlaubt die versetzte Anordnung die universelle Anwendung bei verschieden geformten Trichtern, wie es bei Trompeten, Saxophonen, Tubas etc. der Fall ist.

In Figur 3a ist zudem eine Schraubenfeder 13 gezeigt. Diese Feder 13 erleichtert das Montieren der Befestigungsvorrichtung zusätzlich, indem das Ober- und Unterteil 5, 6 sich durch die Federspannung von selbst öffnen und lediglich die Fixierschraube 8 mittels des Drehknopfs 14 betätigt werden muss.

Figur 4a-d zeigen eine Ausführung der Halterungsvorrichtung des Klang-Deflektors mit Halbkreis-förmigen Ober- und Unterteilen 5, 6, wobei die inneren vorstehenden Elemente 9a und 9b jeweils zweifach ausgeführt sind und die vorstehenden Elemente 10a und 10b jeweils einfach am äusseren Ende der Teile 5, 6. Die Ausführung der Klemmvorrichtung gemäss Figur 4a-d weist insgesamt drei Druckpunkte auf und bewirkt dadurch eine ausbalancierte und bezüglich Stabilität optimierte Positionierung der Vorrichtung.

Vom Scharnier 4 sind hier lediglich die Scharnierteile 4a und 4b des Oberteils 5 bzw. Unterteils 6 gezeigt. Zudem ist eine Öffnung 15 für die Fixierschraube 8 gezeigt.

Das Unterteil 6 weist zudem gemäss Figur 4c beispielsweise zwei Stifte 16 auf, die in entsprechende Ausnehmungen 16' im Oberteil 5 gemäss Figur 4b geführt sind. Die Stifte 16 und Ausnehmungen 16' dienen der Führung von zwei Federn 13, die in Figur 3a gezeigt sind.

Die Befestigungsvorrichtung 3 kann auch mit nur zwei Noppen im Oberteil und zwei Noppen im Unterteil realisiert werden. Dies ermöglicht ebenfalls die erwünschte Funktion der Befestigung.

In Figur 5 ist das Scharnier 4 mit Scharnierteilen 4a und 4b des Oberteils 5 bzw. Unterteils 6 und Scharnierteilen 4c der Halterung 19 gezeigt, das mit einer Schraube 7 und einem Bolzen 7' in der Funktion eines Scharnierbolzens zusammengehalten wird. Zwischen den Scharnierteilen 4c ist ein weiteres Scharnier mit einer Scharnieröse 17 bewegbar positioniert, wobei die Scharnieröse 17 teil des Oberteils 5 ist, wie in Figur 4b gezeigt. Mit den Scharnierteilen 4c ist ein Verbindungselement 18 für die Deflektor-Fläche oder-Platte 2 verbunden. Das Verbindungselement 18 weist hierzu beispielsweise eine Halterung 19 mit einer Öffnung 20 auf, in welche die Deflektor-Fläche 2 eingeschoben werden kann. Die Beweglichkeit des Verbindungselements 18 im Scharnier 4 und somit auch die Festigkeit der Halterung für die Deflektor-Platte 2 kann durch Anziehen oder Lösen der Schraubenverbindung 7, 7', die zugleich als Scharnierbolzen dient, verändert werden.

Figur 7a-c und 8a-b zeigen eine weitere Ausführung des erfindungsgemässen Klang-Deflektors, der anstelle der Haltevorrichtung 3 wie in den vorgängigen Figuren gezeigt, eine Vorrichtung 30 zur Halterung der Deflektorfläche an einem Blasinstrument oder Notenständer aufweist. Das Grundprinzip dieser weiteren Ausführung ist gleich wie in Figuren 1-5, nämlich eine klemmende Befestigung mittels einem Oberteil 50 und Unterteil 60 jeweils mit Noppen 51 bzw. 61, die am Rand des Blasinstruments (oder Notenständers) angelegt werden, und einem Scharnier 40. Der Klang-Deflektor ist wiederum mittels einer Halterung 19 und eines Verbindungsteils 180 mit diesem Scharnier 40 verbunden ist. Figur 7a zeigt das Unterteil 60 mit zwei Noppen 61, die an einem Ende des Unterteils 60 angeordnet sind, vorzugsweise symmetrisch bezüglich seiner Längsachse. Bei einer Befestigung der Klemmvorrichtung 30 an einem Blasinstrument kommen diese Noppen 61 an der Aussenseite eines Trichters S' zu liegen, siehe Figur 7c. Am anderen Ende des Unterteils 60, den Noppen 61 gegenüberliegend sind zwei Scharnierteile 62 angeordnet. Das Unterteil 60 weist zudem zwei Stifte 16 und eine Öffnung 15 auf, welche die gleiche Funktion einnehmen wie die Stifte 16 und eine mittig angeordnete Öffnung 15 in der Vorrichtung aus Figuren 2-5. Figur 7b zeigt das Oberteil 50 mit zwei Noppen 51, die an einem Ende des Oberteils 50 angeordnet sind, wiederum vorzugsweise symmetrisch bezüglich seiner Längsachse. Diese Noppen 51 kommen bei der Befestigung am Blasinstrument auf der Innenfläche des Trichters S' zu liegen. Am von den Noppen 51 gegenüberliegenden Ende des Oberteils 50 sind zwei Scharnierteile 52 angeordnet. Das Oberteil 50 weist zudem eine mittig angeordnete Öffnung 15 und zwei Öffnungen 16' auf, welche beim Zusammenbringen von Ober- und Unterteil die Stifte 16 des Unterteils in Figur 7a aufnehmen. Die Öffnung 15 in Unterteil 60 sowie Oberteil 50 dient der Aufnahme einer Fixierschraube 8 wie auch in Figur 3a-d offenbart.

Der Oberteil 50 und Unterteil 60 sind in einer Ausführung der Erfindung ungleich lang, und in der gezeigten Ausführungsbeispiel ist das Unterteil 60 länger als das Oberteil 50 wie in der Seitenansicht in der Figur 7c dargestellt. Werden Ober- und Unterteil 50 und 60 zusammengebracht und am Trichterrand S' eines Blasinstruments klemmend befestigt, so reicht das Unterteil 60 mit den zwei Noppen 61 auf die Aussenseite des Trichters S' während das Oberteil 50 mit Noppen 51 auf der Innenseite des Trichters S' liegt, wobei die Noppen 51 näher am Rand des Trichters mit Wulst S" liegt als die Noppen 61. Zwischen dem Scharnier 40 und den Noppen 51 des Oberteils 50, insbesondere zwischen der Fixierschraube 80 und den Noppen 51 ist ein Freiraum F gross genug realisiert, um den Wulst S" aufnehmen zu können. Indem sowohl das Oberteil 50 als auch das Unterteil 60 je zwei Noppen an ihren äusseren Enden aufweisen, entstehen vier Druckpunkte auf der Trichteroberfläche, wodurch der Klang-Deflektor am Trichter des Blasinstruments stabil gehalten wird. Eine Schraube 70 mit Bolzen 70' dient wiederum der Fixierung des Scharniers 40 der Haltevorrichtung 30. Das Scharnier 40 ist mit einem Verbindungsteil 180 verbunden, das wiederum mit der Halterung 19 für die Klang-Deflektorfläche 2 verbunden ist.

Figuren 8a und 8b zeigen eine weitere Ausführung des Verbindungsteils 180 zwischen dem Scharnier der Haltevorrichtung 30 und der Halterung 19 für die Klang-Deflektorfläche 2. In dieser Ausführung weist das Verbindungsteil 180, nur eine Scharnieröse 181 auf, während im Vergleich die Ausführung in Figur 5 zwei solche Scharnierteile 4c aufweist. Die Scharnieröse 181 ist in Zusammenwirkung mit dem Oberteil 50 zwischen den beiden Scharnierteilen 52 angeordnet. Dabei liegen die Scharnierteile 52 des Oberteils 50 an der Unterseite 71 des Kopfes der Schraube 70 an, während das eine Scharnierteil 62 des Unterteils 60 an der Seite des Kopfes der Schraube 70 anliegt. Dadurch liegt die Scharnieröse 181 nicht am Kopf der Schraube 70 an, sondern ist durch das Scharnierteil 52 vom Kopf der Schraube 70 beabstandet. Wird das Verbindungsteil 180 für die Deflektorfläche 2 geschwenkt, um die Winkelausrichtung der Deflektorfläche 2 zu justieren, so wird die Schraube 70 nicht bewegt, da die Scharnieröse 181 nicht am Kopf der Schraube 70 anliegt. Dadurch bleibt die Schraubenverbindung 70, 70' auch bei einer Bewegung der Deflektorfläche fest und ein ungewolltes Lösen der Klemmvorrichtung 30 wird verhindert.

Alternativ können auch die Scharnierteile des Unterteils zwischen die Scharnierteile des Oberteils angeordnet werden, wobei die Scharnieröse 181 des Verbindungsteils 180 den Scharnierteilen des Unterteils anliegen würde. Ein ungewolltes Lösen der Schraubenverbindung 70, 70' würde gleichsam verhindert sein.

Die Vorrichtung 30 zur Halterung einer Deflektorfläche an einem Blasinstrument weist zudem eine Feder 130 auf, die über einen der Stifte 16 angeordnet ist. Alternativ kann eine solche Feder auch auf der Fixierschraube 80 platziert werden. Auch in der Vorrichtung aus Figuren 2-6 kann die Feder 13 auch auf der Fixierschraube 8 angeordnet werden.

Die Ausführung des Scharniers 40 und Ausführung des Verbindungsteils 180 mit Schraube 70 wie in Figuren 7 und 8 gezeigt kann auch am Oberteil und Unterteil aus Figuren 2-5 angewendet werden.

## Patentansprüche

1. Klang-Deflektor (1) für ein Blasinstrument (S), wobei der Klang-Deflektor (1) eine Klang-Deflektor-Fläche (2) und eine Vorrichtung (3, 30) zu dessen Halterung am Rand (S") eines Trichters (S') des Blasinstruments (S) aufweist,
und
die Vorrichtung (3, 30) zur Halterung der Deflektor-Fläche (2) ein Oberteil (5, 50) aufweist, das an der inneren Fläche des Trichters (S') befestigbar ist und ein Unterteil (6, 60), das an der äusseren Seite des Trichters (S') befestigbar ist, wobei das Oberteil (5, 50) und Unterteil (6, 60) mittels eines Scharniers (4, 40) miteinander verbunden sind, **dadurch gekennzeichnet, dass** das Unterteil und Oberteil je mindestens zwei Noppen (9a,b 10a,b) aufweisen, wobei zur klemmenden Befestigung an einem Trichter eines Blasinstruments bei einem Zusammenbringen des Oberteils (5, 50) und Unterteils (6, 60) die Noppen (9a, 10a, 51) des Oberteils (5, 50) bezüglich der Noppen (10b, 10b, 61) des Unterteils (6) relativ zu ihrer Mitte seitlich verschoben angeordnet sind, und die Klang-Deflektor-Fläche (2) am Scharnier des Oberteils (5, 50) und Unterteils (6, 60) schwenkbar befestigt ist,
und die Noppen (9a,b, 10a,b, 51, 61) am Oberteil (5, 51) und Unterteil (6, 60) abgerundete Kanten (9', 10') aufweisen.

2. Klang-Deflektor (1) nach Anspruch 1,
**dadurch gekennzeichnet, dass**
die Noppen (9a,b, 10a,b, 51) am Oberteil (5, 50) und Unterteil (6, 60) Gummi aufweisen.

3. Klang-Deflektor (1) nach einem der Ansprüche 1 bis 2,
**dadurch gekennzeichnet, dass**
das Oberteil (5) und das Unterteil (6) je drei Noppen (9a,b, 10a,b) aufweisen.

4. Klang-Deflektor (1) nach Anspruch 3,
**dadurch gekennzeichnet, dass**
das Oberteil (5) und das Unterteil (6) jeweils eine ebene, gerundete Form aufweisen, auf der die Noppen (9a,b, 10a,b) gleichmässig verteilt sind.

5. Klang-Deflektor (1) nach einem der Ansprüche 1 bis 2,
**dadurch gekennzeichnet, dass**
das Oberteil (50) und das Unterteil (60) je zwei Noppen (51, 61) aufweisen.

6. Klang-Deflektor (1) nach Anspruch 5
**dadurch gekennzeichnet, dass**
zwei Noppen (51, 61) jeweils an einem Ende des Oberteils (50) und an einem Ende des Unterteils (60) angeordnet sind.

7. Klang-Deflektor (1) nach Anspruch 5 oder 6
**dadurch gekennzeichnet, dass**
das Unterteil (60) und Oberteil (50) ungleich lang ausgebildet sind.

8. Klang-Deflektor (1) nach einem der Ansprüche 1 bis 7,
**dadurch gekennzeichnet, dass**
die Deflektor-Fläche (2) mittels eines Verbindungselements (18, 180) am Scharnier (4, 40) befestigt ist.

9. Klang-Deflektor (1) nach Anspruch 8, **dadurch gekennzeichnet, dass**
das Oberteil (5, 50) und das Unterteil (6, 60) je zwei Scharnierteile (4a, 4b, 52, 62) aufweisen und das Verbindungselement (18, 180) zur Deflektorfläche (2) eine Scharnieröse (17, 181) aufweist, die zwischen den Scharnierteilen (4a, 4b, 52, 62) des Oberteils und Unterteils (5, 6, 50, 60) angeordnet ist.

10. Klang-Deflektor (1) nach einem der Ansprüche 1 bis 9,
**dadurch gekennzeichnet, dass**
das Scharnier (4, 40) mittels einer Schraubenverbindung mit Schraube und Bolzen (7, 7', 70, 70') fixierbar ist.

11. Klang-Deflektor (1) nach Anspruch 10,
**dadurch gekennzeichnet, dass**
eines der Scharnierteile (52) des Oberteils (50) und eines der Scharnierteile (62) des Unterteils (60) am Kopf der Schraube (70) anliegen und die Scharnieröse (181) vom Kopf der Schraube (70) beabstandet angeordnet ist.

12. Klang-Deflektor (1) nach einem der Ansprüche 1 bis 11
**dadurch gekennzeichnet, dass**
die Vorrichtung (3, 30) zur Halterung des Klang-Deflektors (1) zu dessen Fixierung am Trichter (S') eine lösbare Schraubenbefestigung (8, 80) aufweist.

13. Klang-Deflektor (1) nach einem der Ansprüche 1 bis 12,
**dadurch gekennzeichnet, dass**
zwischen dem Scharnier (4, 40) der Vorrichtung (3, 30) zur Halterung der Deflektor-Fläche (2) und deren Noppen (9a, 9b, 51), die sich am nächsten zum Scharnier (4, 40) befinden, ein Freiraum (F) besteht.

14. Klang-Deflektor (1) nach Anspruch 12 und 13,
**dadurch gekennzeichnet, dass**
der Freiraum (F) zwischen der lösbaren Schraubenbefestigung (8, 80) und den innersten vorstehenden Elementen (9a, 9b, 51) besteht.

15. Klang-Deflektor (1) nach einem der Ansprüche 1 bis 14,
**dadurch gekennzeichnet, dass**
die Vorrichtung (3, 30) zur Halterung des Klang-Deflektors (1) zu dessen Fixierung am Trichter (S')-zwischen dem Oberteil (5, 50) und dem Unterteil (6, 60) eine Feder (13, 130) angeordnet ist.

## Claims

1. Sound deflector (1) for a wind instrument (S), wherein the sound deflector (1) comprises a sound deflector surface (2) and a device (3, 30) for holding it on the rim (S") of a funnel (S') of the wind instrument (S), and the device (3, 30) for holding the deflector surface (2) comprises an upper part (5, 50), which is attachable to the inner surface of the funnel (S'), and a lower part (6, 60), which is attachable to the outer side of the funnel (S'), wherein the upper part (5, 50) and lower part (6, 60) are connected to each other by means of a hinge (4, 40), **characterized in that** the lower part and the upper part each have at least two knobs (9a,b, 10a,b), wherein, for clamping attachment to a funnel of a wind instrument when the upper part (5, 50) and the lower part (6, 60) are brought together, the knobs (9a, 10a, 51) of the upper part (5, 50) relative to the knobs (10a, 10b, 61) of the lower part (6) are arranged laterally displaced relative to their center, and the sound deflector surface (2) is pivotally attached to the hinge of the upper part (5, 50) and lower part (6, 60), and the knobs (9a,b, 10a,b, 51, 61) on the upper part (5, 51) and lower part (6, 60) have rounded edges (9', 10').

2. Sound deflector (1) according to claim 1, **characterized in that** the knobs (9a,b, 10a,b, 51) on the upper part (5, 50) and lower part (6, 60) comprise rubber.

3. Sound deflector (1) according to one of claims 1 to 2, **characterized in that** the upper part (5) and the lower part (6) each have three knobs (9a,b, 10a,b) .

4. Sound deflector (1) according to claim 3, **characterized in that** the upper part (5) and the lower part (6) each have a flat, rounded shape on which the knobs (9a,b, 10a,b) are evenly distributed.

5. Sound deflector (1) according to one of claims 1 to 2, **characterized in that** the upper part (50) and the lower part (60) each have two knobs (51, 61).

6. Sound deflector (1) according to claim 5, **characterized in that** two knobs (51, 61) are arranged at one end of the upper part (50) and at one end of the lower part (60).

7. Sound deflector (1) according to claim 5 or 6, **characterized in that** the lower part (60) and the upper part (50) are formed of unequal length.

8. Sound deflector (1) according to one of claims 1 to 7, **characterized in that** the deflector surface (2) is attached to the hinge (4, 40) by means of a connecting element (18, 180).

9. Sound deflector (1) according to claim 8, **characterized in that** the upper part (5, 50) and the lower part (6, 60) each have two hinge parts (4a, 4b, 52, 62) and the connecting element (18, 180) to the deflector surface (2) has a hinge eyelet (17, 181) which is arranged between the hinge parts (4a, 4b, 52, 62) of the upper part and lower part (5, 6, 50, 60).

10. Sound deflector (1) according to one of claims 1 to 9, **characterized in that** the hinge (4, 40) can be fixed by means of a screw connection with screw and bolt (7, 7', 70, 70').

11. Sound deflector (1) according to claim 10, **characterized in that** one of the hinge parts (52) of the upper part (50) and one of the hinge parts (62) of the lower part (60) abut the head of the screw (70) and the hinge eyelet (181) is arranged spaced from the head of the screw (70).

12. Sound deflector (1) according to one of claims 1 to 11, **characterized in that** the device (3, 30) for holding the sound deflector (1) has a detachable screw fastening (8, 80) for its fixation to the funnel (S').

13. Sound deflector (1) according to one of claims 1 to 12, **characterized in that** there is a free space (F) between the hinge (4, 40) of the device (3, 30) for holding the deflector surface (2) and its knobs (9a, 9b, 51) which are closest to the hinge (4, 40).

14. Sound deflector (1) according to claims 12 and 13, **characterized in that** the free space (F) exists between the detachable screw fastening (8, 80) and the innermost projecting elements (9a, 9b, 51).

15. Sound deflector (1) according to one of claims 1 to 14, **characterized in that** the device (3, 30) for holding the sound deflector (1) for its fixing to the funnel (S') comprises a spring (13, 130) between the upper part (5, 50) and the lower part (6, 60).

## Revendications

1. Déflecteur de son (1) pour un instrument à vent (S), lequel déflecteur de son (1) comporte une surface de déflecteur de son (2) et un dispositif (3, 30) pour retenir celle-ci sur le bord (5") d'un pavillon (S') de l'instrument à vent (S), le dispositif (3, 30) pour le maintien de la surface de déflecteur (2) comprenant une partie supérieure (5, 50) qui peut être fixée sur la surface intérieure du pavillon (S') et une partie inférieure (6, 60) qui peut être fixée sur la surface extérieure du pavillon (S'), la partie supérieure (5, 50) et la partie inférieure (6, 60) étant reliées l'une à l'autre au moyen d'une charnière (4, 40), **caractérisé en ce que** la partie inférieure et la partie supérieure présentent chacune au moins deux tétons (9a,b, 10a,b), les tétons (9a, 10a, 51) de la partie supérieure (5, 50) étant décentrés latéralement par rapport aux tétons (10a, 10b, 61) de la partie inférieure (6) en vue de la fixation par serrage sur un pavillon d'un instrument à vent lors d'un rapprochement de la partie supérieure (5, 50) et de la partie inférieure (6, 60), et la surface de déflecteur de son (2) étant fixée de façon pivotante sur la charnière de la partie supérieure (5, 50) et de la partie inférieure (6, 60), et les tétons (9a,b, 10a,b, 51, 61) de la partie supérieure (5, 51) et de la partie inférieure (6, 60) présentant des bords arrondis (9', 10').

2. Déflecteur de son (1) selon la revendication 1, **caractérisé en ce que** les tétons (9a,b, 10a,b, 51) de la partie supérieure (5, 50) et de la partie inférieure (6, 60) comprennent du caoutchouc.

3. Déflecteur de son (1) selon l'une des revendications 1 à 2, **caractérisé en ce que** la partie supérieure (5) et la partie inférieure (6) présentent chacune trois tétons (9a,b, 10a,b).

4. Déflecteur de son (1) selon la revendication 3, **caractérisé en ce que** la partie supérieure (5) et la partie inférieure (6) ont chacune une forme plane et arrondie sur laquelle les tétons (9a,b, 10a,b) sont répartis régulièrement.

5. Déflecteur de son (1) selon l'une des revendications 1 à 2, **caractérisé en ce que** la partie supérieure (50) et la partie inférieure (60) présentent chacune deux tétons (51, 61).

6. Déflecteur de son (1) selon la revendication 5, **caractérisé en ce que** deux tétons (51, 61) sont disposés à une extrémité de la partie supérieure (50) et deux autres à une extrémité de la partie inférieure (60).

7. Déflecteur de son (1) selon la revendication 5 ou 6, **caractérisé en ce que** la partie inférieure (60) et la partie supérieure (50) sont de longueur inégale.

8. Déflecteur de son (1) selon l'une des revendications 1 à 7, **caractérisé en ce que** la surface de déflecteur (2) est fixée à la charnière (4, 40) au moyen d'un élément d'assemblage (18, 180).

9. Déflecteur de son (1) selon la revendication 8, **caractérisé en ce que** la partie supérieure (5, 50) et la partie inférieure (6, 60) présentent chacune deux parties de charnière (4a, 4b, 52, 62) et l'élément d'assemblage (18, 180) présente vers la surface de déflecteur (2) un œillet de charnière (17, 181) qui est disposé entre les parties de charnière (4a, 4b, 52, 62) de la partie supérieure et de la partie inférieure (5, 6, 50, 60).

10. Déflecteur de son (1) selon l'une des revendications 1 à 9, **caractérisé en ce que** la charnière (4, 40) peut être fixée au moyen d'un assemblage vissé avec une vis et un boulon (7, 7', 70, 70').

11. Déflecteur de son (1) selon la revendication 10, **caractérisé en ce qu'**une des parties de charnière (52) de la partie supérieure (50) et une des parties de charnière (62) de la partie inférieure (60) reposent sur la tête de la vis (70) et l'œillet de charnière (181) est disposé à distance de la tête de la vis (70).

12. Déflecteur de son (1) selon l'une des revendications 1 à 11, **caractérisé en ce que** le dispositif (3, 30) pour le maintien du déflecteur de son (1) présente pour sa fixation sur le pavillon (S') une fixation vissée pouvant être défaite (8, 80).

13. Déflecteur de son (1) selon l'une des revendications 1 à 12, **caractérisé en ce qu'**il existe un espace libre (F) entre la charnière (4, 40) du dispositif (3, 30) pour le maintien de la surface de déflecteur (2) et ses tétons (9a, 9b, 51) les plus proches de la charnière (4, 40).

14. Déflecteur de son (1) selon la revendication 12 et 13, **caractérisé en ce que** l'espace libre (F) se trouve entre la fixation visée pouvant être défaite (8, 80) et les éléments en saillie (9a, 9b, 51) les plus intérieurs.

15. Déflecteur de son (1) selon l'une des revendications 1 à 14, **caractérisé en ce que** le dispositif (3, 30) pour le maintien du déflecteur de son (1) présente pour sa fixation sur le pavillon (S') un ressort (13, 130) entre la partie supérieure (5, 50) et la partie inférieure (6, 60).
